# EUROPÄISCHE PATENTSCHRIFT

(11) **EP 0 926 407 B1**
(45) Veröffentlichungstag und Bekanntmachung des Hinweises auf die Patenterteilung: **23.07.2003**
(21) Anmeldenummer: 98118711.5
(22) Anmeldetag: 02.10.1998
(51) Int. Cl.: F16J 15/08

(54) **Zylinderkopfdichtung**
Cylinder head gasket
Joint de culasse

(30) Priorität: 18.12.1997 DE 19756431
(43) Veröffentlichungstag der Anmeldung: 30.06.1999
(73) Patentinhaber: ElringKlinger AG, 72581 Dettingen (DE)
(72) Erfinder: Ziegler, Hans, 72574 Bad Urach (DE)
(74) Vertreter: Hoeger, Stellrecht & Partner

(56) Entgegenhaltungen:
- EP-A- 0 757 195
- EP-A- 0 790 444
- DE-C- 19 548 573

## Beschreibung

Die Erfindung betrifft eine Zylinderkopfdichtung mit einer Dichtungsplatte, welche wenigstens eine Brennraum-Durchgangsöffnung sowie mindestens drei aufeinandergeschichtete metallische Plattenlagen aufweist, von denen zwei äußere Plattenlagen eine innere Plattenlage zwischen sich aufnehmen, sowie mit einem der Brennraum-Durchgangsöffnung unmittelbar benachbarten und diese umschließenden metallischen Ring zur Pressungserhöhung um die Brennraum-Durchgangsöffnung herum, welcher an einen die Brennraum-Durchgangsöffnung umschließenden Innenrand der inneren Plattenlage angrenzt sowie über wenigstens eine der beiden Hauptoberflächen der inneren Plattenlage übersteht. Insbesondere betrifft die Erfindung eine derartige Zylinderkopfdichtung, bei der jede der beiden äußeren Plattenlagen eine die Brennraum-Durchgangsöffnung umschließende, in Richtung auf die innere Plattenlage vorspringende, ein Brennraum-Dichtelement bildende Sicke aufweist, welche - in der Draufsicht auf die Dichtungsplatte - radial außerhalb des genannten Rings verläuft, der über beide Hauptoberflächen der inneren Plattenlage übersteht, um die Verformbarkeit der Sicken in Richtung senkrecht zur Ebene der Dichtungsplatte zu begrenzen.

Zur Vermeidung von Mißverständnissen sei darauf hingewiesen, daß bei Zylinderkopfdichtungen mit mehr als drei Plattenlagen die vorstehend erwähnten äußeren Plattenlagen nicht an der Außenseite der Dichtungsplatte liegen müssen. Ferner muß sich keine der Plattenlagen unbedingt über die ganze Dichtungsplatte erstrecken.

Derartige Zylinderkopfdichtungen mit gesickten äußeren Plattenlagen sowie einem einstückigen, als sogenannter Stopperring fungierenden metallischen Ring, welcher die Brennraum-Durchgangsöffnung umschließt und über beide Hauptoberflächen der inneren Plattenlage übersteht, ergeben sich aus Fig. 2 der DE-A-195 36 718 und aus Fig. 8 der DE-A-42 19 709. Bei der Herstellung dieser bekannten Zylinderkopfdichtungen wird aus der inneren Plattenlage eine kreisrunde Öffnung ausgestanzt, deren Durchmesser mindestens um die doppelte Breite des Stopperrings größer ist als der Durchmesser der Brennraum-Durchgangsöffnung, außerdem wird aus einem Blech, dessen Dicke um die Summe der Überstände des Stopperrings über die innere Plattenlage größer ist als die Dicke des Blechs der inneren Plattenlage, ein Stopperring ausgestanzt, der in die Öffnung der inneren Plattenlage eingesetzt und gegebenenfalls mit letzterer verlötet wird (siehe DE-A-195 36 718). Bei der Herstellung dieser bekannten Zylinderkopfdichtungen ergibt sich verhältnismäßig viel Abfall in Form der aus der inneren Plattenlage ausgestanzten Kreisscheibe sowie der beim Ausstanzen des Stopperrings anfallenden Kreisscheibe. Ein weiterer Nachteil dieser bekannten Zylinderkopfdichtungen ist darin zu sehen, daß der Stopperring hinsichtlich seiner Höhe noch kalibriert werden muß, da die Dickentoleranzen dickerer Bleche entsprechend größer sind als die Dickentoleranzen dünnerer Bleche.

Zur Vermeidung dieser Nachteile hat man schon Zylinderkopfdichtungen mit gesickten äußeren Plattenlagen konstruiert, bei denen die innere Plattenlage um die Brennraum-Durchgangsöffnung herum eine Kröpfung aufweist, so daß ein die Brennraum-Durchgangsöffnung umschließender ringförmiger Bereich der inneren Plattenlage gegenüber letzterer auf der einen Seite vorspringt und auf der anderen Seite zurückgesetzt ist; auf die zuletzt genannte Seite dieses ringförmigen Bereichs ist ein mit diesem Bereich deckungsgleicher Blechring aufgelegt, dessen Blechstärke doppelt so groß ist wie der Überstand des abgekröpften Bereichs der inneren Plattenlage auf der anderen Seite, so daß sich eine ringförmige Stopperstruktur für die Sicken der beiden äußeren Plattenlagen ergibt. Diese bekannten Zylinderkopfdichtungen haben jedoch einen anderen Nachteil: Durch das Abkröpfen werden in der inneren Plattenlage um die Brennraum-Durchgangsöffnung herum Spannungen hervorgerufen, welche dazu führen, daß sich die abgekröpfte innere Plattenlage in der Nähe der Brennraum-Durchgangsöffnung wölbt und verwindet; dies hat sowohl Probleme beim Handhaben und Zusammenfügen der Lagen der Dichtungsplatte beim Dichtungshersteller als auch Probleme bei der Motorenmontage zur Folge. Außerdem erschwert dieser Verzug der inneren Plattenlage die Einhaltung der Lagetoleranzen der Bestandteile der Zylinderkopfdichtung um die Brennraum-Durchgangsöffnung herum, d. h. im kritischsten Bereich einer Zylinderkopfdichtung.

Bei Zylinderkopfdichtungen der vorstehend geschilderten Art mit gesickten äußeren Plattenlagen hat der Stopperring bzw. die ringförmige Stopperstruktur aus dem abgekröpften Bereich der inneren Plattenlage und dem Blechring nicht nur die Aufgabe, unerwünscht starke Verformungen der Sicken der äußeren Plattenlagen beim Anziehen der Zylinderkopfschrauben und im Motorbetrieb zu verhindern, sondern durch den Stopperring bzw. die geschilderte Stopperstruktur wird auch erreicht, daß sich bei eingebauter Zylinderkopfdichtung unmittelbar um die Brennraum-Durchgangsöffnung herum die höchsten spezifischen Flächenpressungen zwischen Zylinderkopf und Zylinderkopfdichtung einerseits sowie Motorblock und Zylinderkopfdichtung andererseits ergeben.

Nun sind auch schon Zylinderkopfdichtungen der eingangs an erster Stelle aufgeführten Art bekannt, bei denen die äußeren Plattenlagen um die Brennraum-Durchgangsöffnung herum keine Sicken aufweisen und dennoch um die Brennraum-Durchgangsöffnung herum eine Stopperring-ähnliche Struktur vorhanden ist, um zu erreichen, daß sich unmittelbar um die Brennraum-Durchgangsöffnung herum die höchsten spezifischen Flächenpressungen zwischen Zylinderkopfdichtung, Zylinderkopf und Motorblock ergeben und so der Brennraum auch ohne Sicken der äußeren Plattenlagen abgedichtet wird. Naturgemäß ergeben sich bei diesen bekannten Zylinderkopfdichtungen dieselben Probleme und Nachteile, wie sie vorstehend für bekannte Zylinderkopfdichtungen mit gesickten äußeren Plattenlagen geschildert wurden.

Der Erfindung lag die Aufgabe zugrunde, diese bekannten Zylinderkopfdichtungen so zu verbessern, daß die vorstehend erwähnten Nachteile und Probleme zumindest im wesentlichen entfallen.

Ausgehend von einer Zylinderkopfdichtung der eingangs an erster Stelle erwähnten Art läßt sich diese Aufgabe erfindungsgemäß dadurch lösen, daß der Ring ein aus der inneren Plattenlage ausgeschnittenes Fügeteil aufweist, welches dieselbe Dicke wie die innere Plattenlage besitzt und in die sich beim Ausschneiden ergebende Öffnung der inneren Plattenlage so eingefügt ist, daß es um einen Bruchteil der Dicke der inneren Plattenlage über deren eine Hauptoberfläche übersteht, und daß zwischen derjenigen äußeren Plattenlage, welche von der überstehenden Seite des Fügeteils abgewandt ist, und dem Fügeteil ein Blechring angeordnet ist, dessen radial äußere Kontur - in der Draufsicht auf die innere Plattenlage - innerhalb der Öffnung der inneren Plattenlage liegt, wobei die Dicke des Fügeteils ein Mehrfaches der Dicke des Blechrings ist.

Gegenüber der vorstehend geschilderten bekannten Zylinderkopfdichtung mit abgekröpfter innerer Plattenlage hat die erfindungsgemäße Zylinderkopfdichtung den Vorteil, daß sich der Stopperring bzw. die Stopperring-ähnliche Struktur herstellen läßt, ohne daß dabei Spannungen in der inneren Plattenlage erzeugt werden, d. h. Spannungen, welche zu Wölbungen, Verwindungen oder Verzügen der inneren Plattenlage in der Nähe der Brennraum-Durchgangsöffnung führen würden. Im Vergleich mit den Zylinderkopfdichtungen nach der DE-A-195 36 718 und der DE-A-42 19 709 wird durch die Erfindung Material eingespart, obwohl bei der Herstellung des Blechrings der erfindungsgemäßen Zylinderkopfdichtung Abfall entsteht, denn infolge der geringen Blechstärke dieses Blechrings fällt beim Ausstanzen des letzteren mengenmäßig verhältnismäßig wenig Abfall an. Darüber hinaus führt die Erfindung gegenüber diesem Stand der Technik aber auch noch zu dem Vorteil, daß der Stopperring bzw. die Stopperring-ähnliche Struktur nicht kalibriert werden muß, da das Fügeteil dieselben Dickentoleranzen hat wie die innere Plattenlage und die Dickentoleranzen des dünnen Blechrings vergleichsweise vernachlässigbar sind.

Die erfindungsgemäße Lösung eignet sich nicht nur für Zylinderkopfdichtungen, bei denen die beiden äußeren Plattenlagen um die Brennraum-Durchgangsöffnung herum keine Sicken aufweisen, sondern auch für Zylinderkopfdichtungen mit gesickten äußeren Plattenlagen und einem die Brennraum-Durchgangsöffnung unmittelbar umschließenden Bereich mit einer echten Stopperfunktion für die Sicken der beiden äußeren Plattenlagen. Derartige Ausführungsformen der erfindungsgemäßen Zylinderkopfdichtung zeichnen sich dadurch aus, daß jede der äußeren Plattenlagen eine die Brennraum-Durchgangsöffnung umschlieBende, in Richtung auf die innere Plattenlage vorspringende und so ein Brennraum-Dichtelement bildende Sicke aufweist, welche - in der Draufsicht auf die Dichtungsplatte - radial außerhalb des Fügeteils und des Blechrings verläuft, so daß die Verformbarkeit der Sicken in Richtung senkrecht zur Ebene der Dichtungsplatte durch das Fügeteil und den Blechring begrenzt werden kann.

Ebenso wie bei den vorstehend geschilderten bekannten Zylinderkopfdichtungen werden bei bevorzugten Ausführungsformen der erfindungsgemäßen Zylinderkopfdichtung das Fügeteil und der Blechring von den beiden äußeren Plattenlagen überdeckt, obwohl die letzteren grundsätzlich auch radial außerhalb des Fügeteils und des Blechrings enden können - dann müßte nur die Summe der Dicken des Fügeteils und des Blechrings ungefähr um die Summe der Materialstärken der beiden äußeren Plattenlagen größer bemessen werden.

Grundsätzlich könnte das Fügeteil auf jede geeignete Weise aus der inneren Plattenlage herausgeschnitten werden, z. B. mittels eines Laserstrahls; wie sich aus dem Folgenden noch ergeben wird, werden jedoch Ausführungsformen bevorzugt, bei denen das Fügeteil ein aus der inneren Plattenlage ausgestanztes Stanzteil ist. Wird das Fügeteil aus der inneren Plattenlage mit einem Stanzwerkzeug ausgestanzt, welches einen mit einer Schneidkante versehenen Stanzstempel und eine Matrize mit einer eine Gegenschneide bildenden Matrizenöffnung aufweist, läßt sich nämlich ein derart enger Schneidspalt erreichen, daß das nach dem Ausstanzen in die innere Plattenlage zurückgeschobene Fügeteil in der beim Stanzen in der inneren Plattenlage erzeugten Öffnung von selbst gehalten wird, bis weitere Schritte des Verfahrens zur Herstellung der erfindungsgemäßen Zylinderkopfdichtung durchgeführt wurden. Beim Ausstanzen des Fügeteils ergeben sich an dessen Außenumfang eine Schnitt- und eine Bruchzone, welche in Vorschubrichtung des in die Matrize eintretenden Stanzstempels aufeinanderfolgen; je enger der Schneidspalt, desto länger ist die Schnittzone, so daß ein erfindungsgemäß sehr enger Schneidspalt zu einer verhältnismäßig langen Schnittzone sowie einer verhältnismäßig kurzen Bruchzone führt, was für das Zurückschieben des Fügeteils in die Öffnung der inneren Plattenlage von Bedeutung ist, weil das Fügeteil spannungsfrei bleiben soll. Bei bevorzugten Ausführungsformen der erfindungsgemäßen Zylinderkopfdichtung ist das Fügeteil demnach in der beim Ausstanzen bezüglich der Achse der Brennraum-Durchgangsöffnung gegebenen Drehwinkelposition in die sich beim Ausstanzen ergebende Öffnung der inneren Plattenlage eingefügt; solche Ausführungsformen zeichnen sich deshalb insbesondere dadurch aus, daß beim Ausstanzen des Fügeteils die mittlere Breite des Schneid- bzw. Stanzspalts zwischen Fügeteil und innerer Plattenlage einige Micrometer, vorzugsweise nicht mehr als 20 µm und insbesondere ungefähr 10 µm beträgt.

Der Blechring könnte gegebenenfalls, insbesondere auch nur bereichsweise, etwas schmäler sein als das Fügeteil; bevorzugt werden jedoch Ausführungsformen, bei denen das Fügeteil und der Blechring - in der Draufsicht auf den Blechring bzw. das Fügeteil - mindestens ungefähr deckungsgleich sind.

Durch eine entsprechende Gestaltung des Umfangs des Stanzstempels und der Öffnung der Matrize des Stanzwerkzeugs zum Ausstanzen des Fügeteils bzw. des Blechrings kann das Fügeteil bzw. der Blechring breitenprofiliert werden, um örtlich unterschiedlichen Bauteilsteifigkeiten von Motorblock und/oder Zylinderkopf Rechnung zu tragen. Eine vergleichbare Maßnahme ist aus der DE-A-42 19 709 bekannt.

Wenn der Stopperring bzw. die Stopperring-ähnliche Struktur nur von dem Fügeteil und einem einzigen Blechring gebildet wird, wie dies aus Herstellungs- und Materialgründen zu bevorzugen ist, sollte die Dicke des Blechrings gleich dem Doppelten des Überstands des Fügeteils über die innere Plattenlage sein. Bei Zylinderkopfdichtungen mit zwei gesickten äußeren Plattenlagen kann die Dicke des Blechrings von dieser Bemessungsregel jedoch auch abweichen, nämlich dann, wenn die Sicken der beiden äußeren Plattenlagen nicht gleich hoch sind und/oder der maximale Verformungsgrad der Sicken nicht gleich groß gemacht werden soll.

Der Blechring kann auf das Fügeteil oder auf die Innenseite der einen äußeren Plattenlage aufgelegt werden; nachdem man aus Gründen der Handhabung den Blechring zweckmäßigerweise durch Schweißen anheftet, empfiehlt es sich, den Blechring auf das Fügeteil aufzulegen und möglichst gleichzeitig das Fügeteil und den Blechring durch Schweißen anzuheften, so daß die innere Plattenlage, das Fügeteil und der Blechring ein Bauteil mit festem Zusammenhalt bilden.

Die Erfindung erlaubt es auch, das Fügeteil nach dem Ausstanzen auf einfachste Weise sofort in seine endgültige Position bezüglich der inneren Plattenlage zu bringen: Zu diesem Zweck wird erfindungsgemäß ein Verfahren vorgeschlagen, bei dem das Fügeteil aus der inneren Plattenlage mittels eines Stanzwerkzeugs ausgestanzt wird, welches aufweist einen mit einer Schneidkante versehenen Stanzstempel, eine Matrize mit einer eine Gegenschneide bildenden Matrizenöffnung sowie einen in letzterer verschiebbaren Ausstoßstempel für das Fügeteil, welcher in Richtung auf den Stanzstempel gegen einen derart positionierten Anschlag verfahren werden kann, daß das auf dem gegen diesen Anschlag anliegenden Ausstoßstempel aufliegende Fügeteil in seiner gewünschten Endposition in die Öffnung der inneren Plattenlage eingefügt ist, wobei nach Vollendung des Stanzvorgangs der das Fügeteil tragende Ausstoßstempel gegen diesen Anschlag gefahren wird. Da das Fügeteil dann seine Position bezüglich der inneren Plattenlage beibehält, läßt sich das aus innerer Plattenlage und Fügeteil bestehende Bauteil anschließend ohne weiteres handhaben, z. B. zu einer Schweißstation transportieren, ohne daß die Gefahr besteht, daß das Fügeteil in der fertigen Zylinderkopfdichtung nicht mehr verzugsfrei ist, weil es aus der inneren Plattenlage herausgefallen ist und vor dem Wiedereinfügen versehentlich verdreht wurde.

Weitere Merkmale, Vorteile und Einzelheiten der Erfindung ergeben sich aus der nachfolgenden Beschreibung sowie der beigefügten zeichnerischen Darstellung einiger besonders vorteilhafter Ausführungsformen des in eine innere Plattenlage eingefügten Fügeteils bzw. der Dichtungsplatte der erfindungsgemäßen Zylinderkopfdichtung.

In der Zeichnung zeigen:
- Fig. 1: einen Schnitt durch einen an eine Brennraum-Durchgangsöffnung angrenzenden Bereich einer Dichtungsplatte einer bekannten Zylinderkopfdichtung;
- Fig. 2: einen Schnitt durch den Stopperring bzw. die Stopperring-ähnliche Struktur und den diesem bzw. dieser benachbarten Bereich einer inneren Plattenlage einer ersten bevorzugten Ausführungsform der erfindungsgemäßen Zylinderkopfdichtung;
- Fig. 3: einen Schnitt durch den einer Brennraum-Durchgangsöffnung benachbarten Bereich einer Dichtungsplatte einer zweiten bevorzugten Ausführungsform der erfindungsgemäßen Zylinderkopfdichtung und
- Fig. 4: eine Variante der in Fig. 3 gezeigten Ausführungsform.

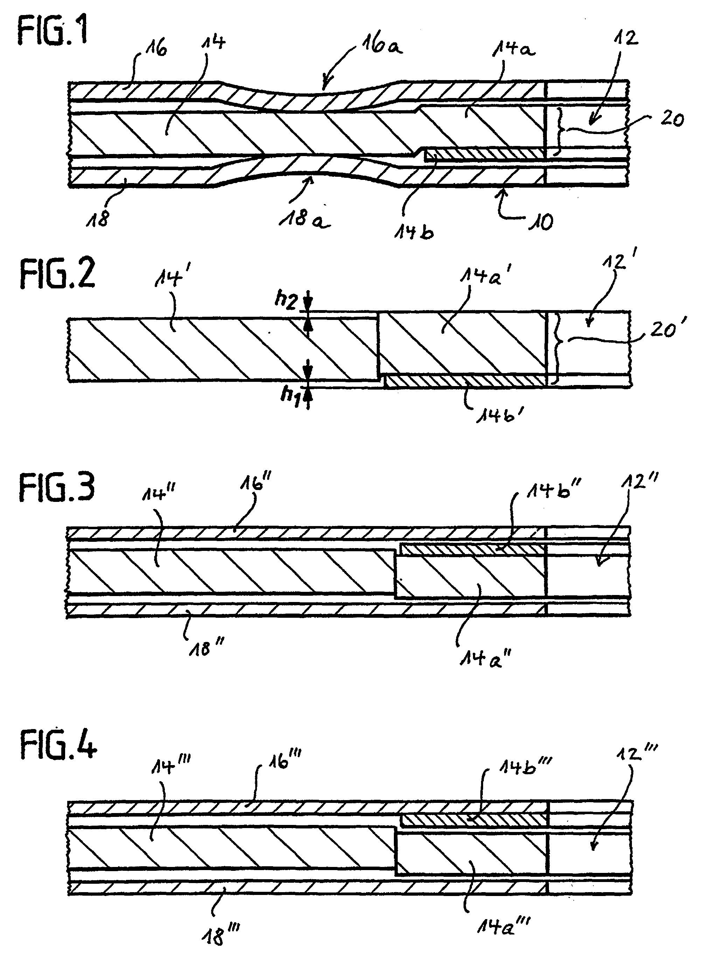

Die Fig. 1 zeigt einen Schnitt durch einen Bereich einer Dichtungsplatte 10 einer bekannten Zylinderkopfdichtung, welcher Bereich an eine Brennraum-Durchgangsöffnung 12 der Dichtungsplatte 10 angrenzt. Die Dichtungsplatte besteht im wesentlichen aus drei Stahlblechlagen, nämlich einer mittleren Plattenlage 14, oft auch Trägerlage genannt, sowie einer oberen und einer unteren gesickten Plattenlage 16 bzw. 18 aus Federstahlblech. Diese drei Lagen bilden ein Laminat, durch das sich die Brennraum-Durchgangsöffnung 12 hindurcherstreckt.

Zur Abdichtung der Brennraum-Durchgangsöffnung sind Sicken 16a und 18a vorgesehen, welche die Brennraum-Durchgangsöffnung 12 ringförmig umschließen und mit ihren einander zugewandten Kuppen gegen die mittlere Plattenlage 14 anliegen. Die mittlere Plattenlage 14 ist so abgekröpft, daß ein die Brennraum-Durchgangsöffnung 12 umschließender ringförmiger Bereich 14a über die obere Hauptoberfläche der mittleren Plattenlage 14 vorsteht und zusammen mit einem Blechring 14b einen ringförmigen, die Brennraum-Durchgangsöffnung 12 umschließenden Stopperbereich 20 bildet, wobei die Blechstärke des Blechrings 14b doppelt so groß ist wie der Überstand des abgekröpften Bereichs 14a über die obere Hauptoberfläche der mittleren Plattenlage 14. Durch den Stopperbereich 20 wird verhindert, daß beim Einspannen der Zylinderkopfdichtung zwischen einem Motorblock und einem Zylinderkopf die Sicken 16a und 18a völlig flachgedrückt werden, um so deren vertikale Flexibilität und ihr Abdichtvermögen im Motorbetrieb zu erhalten.

Bei einer erfindungsgemäßen Zylinderkopfdichtung treten an die Stelle der mittleren Plattenlage 14 und des Blechrings 14b die in Fig. 2 dargestellte mittlere Plattenlage 14' sowie ein Ring 20', der eine Brennraum-Durchgangsöffnung 12' umschließt und aus einem Fügeteil 14a' sowie einem Blechring 14b' besteht.

Erfindungsgemäß wurde das Fügeteil 14a' aus der mittleren Plattenlage 14' ausgestanzt und dann in diese Plattenlage zurückgeschoben, und zwar noch innerhalb des Stanzwerkzeugs, um auf einfache Weise die in Fig. 2 dargestellte, endgültige Position des Fügeteils 14a' relativ zur Plattenlage 14' herbeiführen zu können. Sodann wird der Blechring 14b' auf das Fügeteil 14a' aufgelegt, worauf in einer Schweißstation die beiden Teile des Rings 20' miteinander und mit der mittleren Plattenlage 14' verheftet werden.

Zu beiden Seiten der in Fig. 2 dargestellten Teile der erfindungsgemäßen Zylinderkopfdichtung sollen sich gesickte Plattenlagen entsprechend den Lagen 16 und 18 der in Fig. 1 dargestellten bekannten Zylinderkopfdichtung befinden, wobei der Ring 20' radial innerhalb der Sicken 16a und 18a verläuft.

Sind die beiden Sicken 16a, 18a gleich hoch, was nicht notwendigerweise der Fall sein muß, sind die in die Fig. 2 eingezeichneten Überstände h₁ und h₂ gleich groß und die Dicke des Blechrings 14b' ist gleich 2 · h₁ bzw. 2 · h₂.

Die Ausführungsformen nach den Figuren 3 und 4 sind für Zylinderkopfdichtungen gedacht, bei denen die beiden die innere Plattenlage zwischen sich einschließenden Plattenlagen der Dichtungsplatte keine die Brennraum-Durchgangsöffnung umschließenden Sicken aufweisen. In den Figuren 3 und 4 wurden dieselben Bezugszeichen wie in den Figuren 1 und 2 verwendet, jedoch wurden die Bezugszeichen in Fig. 3 mit zwei Strichen versehen, in Fig. 4 mit drei Strichen.

Bei der in Fig. 3 dargestellten Ausführungsform liegt der Blechring 14b" auf dem ringförmigen Fügeteil 14a" auf und soll mit letzterem durch mehrere Schweißpunkte verheftet sein; das Fügeteil 14a" soll mit der mittleren Plattenlage 14" gleichfalls durch mehrere Schweißpunkte verheftet sein. Wie bei der in Fig. 2 dargestellten Ausführungsform steht der von dem Fügeteil 14a" und dem Blechring 14b" gebildete Ring auf beiden Seiten gleich weit über die mittlere Plattenlage 14" vor.

Bei der in Fig. 4 dargestellten Ausführungsform ist der Blechring 14b''' auf die obere Plattenlage 16''' aufgelegt und soll mit dieser durch mehrere Schweißpunkte verheftet sein. Das Fügeteil 14a''' ist mit seiner Oberseite um die halbe Dicke des Blechrings 14b''' gegenüber der oberen Hauptoberfläche der mittleren Plattenlage 14''' zurückgesetzt und steht infolgedessen um dasselbe Maß über die untere Hauptoberfläche der mittleren Plattenlage 14''' vor. Ferner soll auch das Fügeteil 14a''' durch mehrere Schweißpunkte mit der mittleren Plattenlage 14''' verheftet sein.

## Patentansprüche

1. Zylinderkopfdichtung mit einer Dichtungsplatte, welche wenigstens eine Brennraum-Durchgangsöffnung (12'; 12'', 12''') sowie mindestens drei aufeinandergeschichtete metallische Plattenlagen (14', 16', 18', 14'', 16'', 18''; 14''', 16''', 18''') aufweist, von denen zwei äußere Plattenlagen eine innere Plattenlage zwischen sich aufnehmen, sowie mit einem der Brennraum-Durchgangsöffnung unmittelbar benachbarten und diese umschließenden metallischen Ring (20') zur Pressungserhöhung um die Brennraum-Durchgangsöffnung herum, welcher an einen die Brennraum-Durchgangsöffnung umschließenden Innenrand der inneren Plattenlage angrenzt sowie über wenigstens eine der beiden Hauptoberflächen der inneren Plattenlage (14'; 14''; 14''') übersteht, **dadurch gekennzeichnet, daß** der Ring ein aus der inneren Plattenlage (14'; 14''; 14''') ausgeschnittenes Fügeteil (14a'; 14a''; 14a''') aufweist, welches dieselbe Dicke wie die innere Plattenlage besitzt und in die sich beim Ausschneiden ergebende Öffnung der inneren Plattenlage so eingefügt ist, daß es um einen Bruchteil der Dicke der inneren Plattenlage über deren eine Hauptoberfläche übersteht, und daß zwischen derjenigen äußeren Plattenlage, welche von der überstehenden Seite des Fügeteils abgewandt ist, und dem Fügeteil ein Blechring (14b';14b";14b"') angeordnet ist, dessen radial äußere Kontur - in der Draufsicht auf die innere Plattenlage - innerhalb der Öffnung der inneren Plattenlage liegt, wobei die Dicke des Fügeteils ein Mehrfaches der Dicke des Blechrings ist.

2. Zylinderkopfdichtung nach Anspruch 1, **dadurch gekennzeichnet, daß** das Fügeteil ein aus der inneren Plattenlage ausgestanztes Stanzteil ist.

3. Zylinderkopfdichtung nach Anspruch 2, **dadurch gekennzeichnet, daß** das Fügeteil in der beim Ausstanzen bezüglich der Achse der Brennraum-Durchgangsöffnung gegebenen Drehwinkelposition in die Öffnung der inneren Plattenlage eingefügt ist.

4. Zylinderkopfdichtung nach Anspruch 3, **dadurch gekennzeichnet, daß** beim Ausstanzen des Fügeteils die mittlere Breite des Schneid- bzw. Stanzspalts einige Micrometer, vorzugsweise nicht mehr als 20 µm und insbesondere ungefähr 10 µm beträgt.

5. Zylinderkopfdichtung nach einem oder mehreren der vorstehenden Ansprüche, **dadurch gekennzeichnet, daß** das Fügeteil durch Schweißen an die innere Plattenlage angeheftet ist.

6. Zylinderkopfdichtung nach einem oder mehreren der vorstehenden Ansprüche, **dadurch gekennzeichnet, daß** das Fügeteil und der Blechring von den beiden äußeren Plattenlagen überdeckt werden.

7. Zylinderkopfdichtung nach einem oder mehreren der vorstehenden Ansprüche, **dadurch gekennzeichnet, daß** die Dicke des Fügeteils mindestens dem Dreifachen, vorzugsweise mindestens dem Vierfachen der Dicke des Blechrings entspricht.

8. Zylinderkopfdichtung nach einem oder mehreren der vorstehenden Ansprüche, **dadurch gekennzeichnet, daß** das Fügeteil und der Blechring - in der Draufsicht auf den Blechring - mindestens ungefähr deckungsgleich sind.

9. Zylinderkopfdichtung nach einem oder mehreren der vorstehenden Ansprüche, **dadurch gekennzeichnet, daß** die Dicke des Blechrings gleich dem Doppelten des Überstands des Fügeteils über die innere Plattenlage ist.

10. Zylinderkopfdichtung nach einem oder mehreren der vorstehenden Ansprüche, **dadurch gekennzeichnet, daß** der Blechring durch Schweißen an das Fügeteil oder die dem Blechring benachbarte äußere Plattenlage angeheftet ist.

11. Zylinderkopfdichtung nach einem oder mehreren der vorstehenden Ansprüche, **dadurch gekennzeichnet, daß** zur Kompensation einer örtlich unterschiedlichen Bauteilsteifigkeit von Motorblock und/oder Zylinderkopf die in bezüglich der Brennraum-Durchgangsöffnung radialer Richtung gemessene Breite mindestens des Fügeteils, vorzugsweise auch des Blechrings, um die Brennraum-Durchgangsöffnung herum variiert.

12. Zylinderkopfdichtung nach einem oder mehreren der vorstehenden Ansprüche, **dadurch gekennzeichnet, daß** jede der äußeren Plattenlagen eine die Brennraum-Durchgangsöffnung umschließende, in Richtung auf die innere Plattenlage vorspringende und so ein Brennraum-Dichtelement bildende Sicke aufweist, welche - in der Draufsicht auf die Dichtungsplatte - radial außerhalb des Fügeteils und des Blechrings verläuft, so daß die Verformbarkeit der Sicken in Richtung senkrecht zur Ebene der Dichtungsplatte durch das Fügeteil und den Blechring begrenzbar ist.

13. Verfahren zur Herstellung einer Zylinderkopfdichtung nach Anspruch 3, **dadurch gekennzeichnet, daß** das Fügeteil aus der inneren Plattenlage mittels eines Stanzwerkzeugs ausgestanzt wird, welches aufweist einen mit einer Schneidkante versehenen Stanzstempel, eine Matrize mit einer eine Gegenschneide bildenden Matrizenöffnung sowie einen in letzterer verschiebbaren Ausstoßstempel, welcher in Richtung auf den Stanzstempel gegen einen derart positionierten Anschlag verfahrbar ist, daß das auf dem gegen diesen Anschlag anliegenden Ausstoßstempel aufliegende Fügeteil in seiner gewünschten Endposition in die Öffnung der inneren Plattenlage eingefügt ist, und daß nach Vollendung des Stanzvorgangs der das Fügeteil tragende Ausstoßstempel gegen diesen Anschlag gefahren wird.

## Claims

1. Cylinder head gasket with a gasket plate comprising at least one combustion chamber hole (12'; 12"; 12"') and at least three metallic plate layers (14', 16', 18'; 14", 16", 18"; 14"', 16"', 18"') superimposed one upon the other, two outer plate layers thereof receiving between them an inner plate layer, and with a metallic ring (20') immediately adjacent to said combustion chamber hole and enclosing said combustion chamber hole so as to raise the pressure around said combustion chamber hole, said ring bordering on an inner edge of said inner plate layer which encloses said combustion chamber hole and projecting over at least one of the two main surfaces of said inner plate layer (14'; 14"; 14"'), **characterized in that** said ring comprises a joining member (14a'; 14a"; 14a"') cut out of said inner plate layer (14'; 14"; 14"') and having the same thickness as said inner plate layer, said joining member being inserted into the opening produced in said inner plate layer by the cutting-out so as to project by a fraction of the thickness of said inner plate layer over one main surface thereof, and **in that** a sheet metal ring (14b'; 14b"; 14b"') is arranged between said joining member and that outer plate layer which is remote from the projecting side of said joining member, the radial outer contour of said sheet metal ring lying - in the plan view of said inner plate layer - within the opening of said inner plate layer, and the thickness of said joining member being a multiple of the thickness of said sheet metal ring.

2. Cylinder head gasket as defined in claim 1, **characterized in that** said joining member is a punched part punched out of said inner plate layer.

3. Cylinder head gasket as defined in claim 2, **characterized in that** said joining member is inserted into the opening in said inner plate layer in the rotary angular position assumed in relation to the axis of the combustion chamber hole during the punching-out.

4. Cylinder head gasket as defined in claim 3, **characterized in that** the punching-out of the joining member results in a cutting or punching clearance whose average width is several micrometers, preferably not more than 20 µm, and, in particular, approximately 10 µm.

5. Cylinder head gasket as defined in any one or several of the preceding claims, **characterized in that** said joining member is joined to said inner plate layer by welding.

6. Cylinder head gasket as defined in any one or several of the preceding claims, **characterized in that** said joining member and said sheet metal ring are covered by both of said outer plate layers.

7. Cylinder head gasket as defined in any one or several of the preceding claims, **characterized in that** the thickness of said joining member is at least three times, preferably at least four times, the thickness of said sheet metal ring.

8. Cylinder head gasket as defined in any one or several of the preceding claims, **characterized in that** said joining member and said sheet metal ring - in the plan view of said sheet metal ring - are at least approximately congruent.

9. Cylinder head gasket as defined in any one or several of the preceding claims, **characterized in that** the thickness of said sheet metal ring is equal to twice the projection of said joining member over said inner plate layer.

10. Cylinder head gasket as defined in any one or several of the preceding claims, **characterized in that** said sheet metal ring is joined by welding to said joining member or to said outer plate layer adjacent to said sheet metal ring.

11. Cylinder head gasket as defined in any one or several of the preceding claims, **characterized in that** in order to compensate for a locally differing component rigidity of engine block and/or cylinder head, the width of at least said joining member, preferably also of said sheet metal ring, measured in the radial direction in relation to the combustion chamber hole, varies around said combustion chamber hole.

12. Cylinder head gasket as defined in any one or several of the preceding claims, **characterized in that** each of said outer plate layers has a bead enclosing said combustion chamber hole, protruding in the direction towards said inner plate layer and thus forming a combustion chamber sealing element, said bead extending - in the plan view of said gasket plate - radially outside of said joining member and of said sheet metal ring so that the deformability of said beads in the direction perpendicular to the plane of said gasket plate is delimitable by said joining member and said sheet metal ring.

13. Method of manufacturing a cylinder head gasket as defined in claim 3, **characterized in that** said joining member is punched out of said inner plate layer with a punching tool comprising a punch having a cutting edge, a die having a die opening forming a counter cutting edge, and an ejector displaceable in said die opening, said ejector being moveable in the direction towards said punch against a stop positioned such that the joining member lying on said ejector resting against said stop is inserted in its desired end position into the opening in said inner plate layer, and **in that** after completion of the punching operation, said ejector carrying said joining member is moved against said stop.

## Revendications

1. Joint de culasse avec une tôle d'étanchéité comportant au moins une ouverture de passage (12', 12", 12"') pour la chambre de combustion et au moins trois couches de tôles métalliques (14', 16', 18', 14", 16", 18", 14"', 16"', 18"') superposées, dont deux couches de tôles extérieures logent entre elles une couche de tôle intérieure, et avec un anneau métallique (20') se trouvant à proximité immédiate de l'ouverture de passage pour la chambre de combustion et enfermant celle-ci, en vue de l'augmentation de la pression autour de l'ouverture de passage pour la chambre de combustion, lequel anneau est contigu à un bord intérieur de la couche de tôle intérieure, enfermant l'ouverture de passage pour la chambre de combustion, et étant à porte-à-faux d'une des deux surfaces principales au moins de la couche de tôle intérieure (14', 14", 14"'), **caractérisé en ce que** l'anneau comporte un élément d'assemblage (14a', 14a", 14a"') découpé de la couche de tôle intérieure (14', 14", 14"'), disposant de la même épaisseur que la couche de tôle intérieure et assemblé dans l'ouverture de la couche de tôle intérieure formée lors de la coupe, de sorte qu'il est en porte-à-faux de l'une des surfaces principales d'une fraction de l'épaisseur de la couche de tôle intérieure, et qu'entre la couche de tôle extérieure se trouvant à l'opposé du côté en porte-à-faux de l'élément d'assemblage et l'élément d'assemblage est placé un anneau en tôle (14b', 14b", 14b"') dont le contour radial extérieur - en vue de dessus sur la couche de tôle intérieure - se trouve dans l'ouverture de la couche de tôle intérieure, l'épaisseur de l'élément d'assemblage étant un multiple de l'épaisseur de l'anneau en tôle.

2. Joint de culasse selon la revendication 1, **caractérisé en ce que** l'élément d'assemblage consiste en une pièce découpée de la couche de tôle intérieure.

3. Joint de culasse selon la revendication 2, **caractérisé en ce que** l'élément d'assemblage est encastré dans l'ouverture de la couche de tôle intérieure dans la position d'angle de rotation donnée lors de la découpe par rapport à l'axe de l'ouverture de passage pour la chambre de combustion.

4. Joint de culasse selon la revendication 3, **caractérisé en ce que** lors de la découpe de l'élément d'assemblage, la largeur moyenne de l'interstice de découpe est de quelques micromètres, n'est pas supérieure à 20 µm, préférentiellement, et est notamment de 10 µm environ.

5. Joint de culasse selon l'une ou plusieurs des revendications précédentes, **caractérisé en ce que** l'élément d'assemblage est pointé à la couche de tôle intérieure par soudage.

6. Joint de culasse selon l'une ou plusieurs des revendications précédentes, **caractérisé en ce que** l'élément d'assemblage et l'anneau en tôle sont recouverts par les deux couches de tôles extérieures.

7. Joint de culasse selon l'une ou plusieurs des revendications précédentes, **caractérisé en ce que** l'épaisseur de l'élément d'assemblage est au moins trois fois supérieure et préférentiellement au moins quatre fois supérieure à l'épaisseur de l'anneau en tôle.

8. Joint de culasse selon l'une ou plusieurs des revendications précédentes, **caractérisé en ce que** l'élément d'assemblage et l'anneau en tôle - en vue de dessus sur l'anneau en tôle - coïncident au moins approximativement.

9. Joint de culasse selon l'une ou plusieurs des revendications précédentes, **caractérisé en ce que** l'épaisseur de l'anneau en tôle est le double du porte-à-faux de l'élément d'assemblage sur la couche de tôle intérieure.

10. Joint de culasse selon l'une ou plusieurs des revendications précédentes, **caractérisé en ce que** l'anneau en tôle est pointé par soudage à l'élément d'assemblage ou à la couche de tôle extérieure adjacente à l'anneau en tôle.

11. Joint de culasse selon l'une ou plusieurs des revendications précédentes, **caractérisé en ce qu'**en vue de la compensation d'une rigidité localement différente des composants bloc moteur et/ou du joint de culasse, la largeur de l'élément d'assemblage au moins, et préférentiellement aussi de l'anneau en tôle, mesurée dans le sens radial par rapport à l'ouverture de passage pour la chambre de combustion, varie autour de l'ouverture de passage pour la chambre de combustion.

12. Joint de culasse selon l'une ou plusieurs des revendications précédentes, **caractérisé en ce que** chacune des couches de tôles extérieures comporte une nervure enfermant l'ouverture de passage pour la chambre de combustion , en porte-à-faux en direction de la couche de tôle intérieure et formant ainsi un élément d'étanchéité de la chambre de combustion, nervure s'étendant - en vue de dessus sur la tôle d'étanchéité - radialement à l'extérieur de l'élément d'assemblage et de l'anneau en tôle, de sorte que l'aptitude à la déformation des nervures est limitable en direction verticale par rapport au plan de la tôle d'étanchéité, par l'élément d'assemblage et l'anneau en tôle.

13. Procédé de fabrication d'un joint de culasse selon la revendication 3, **caractérisé en ce que** l'élément d'assemblage est découpé de la couche de tôle intérieure au moyen d'un outil de découpage comportant un poinçon muni d'un bord de découpe, une matrice avec une ouverture formant une contre-lame et un poinçon d'expulsion mobile dans cette ouverture et déplaçable en direction du poinçon contre une butée positionnée, de sorte que l'élément d'assemblage couché sur le poinçon et s'appuyant contre cette butée est encastré dans sa position finale souhaitée, dans l'ouverture de la couche de tôle intérieure, et qu'à la suite du découpage, le poinçon d'expulsion supportant l'élément d'assemblage est déplacé contre cette butée.
